# EUROPÄISCHE PATENTSCHRIFT

(11) **EP 1 202 875 B1**
(45) Veröffentlichungstag und Bekanntmachung des Hinweises auf die Patenterteilung: **20.10.2004**
(21) Anmeldenummer: 00958120.8
(22) Anmeldetag: 08.07.2000
(51) Int. Cl.: B60R 16/02

(54) **VERFAHREN, VORRICHTUNG UND STEUEREINHEIT ZUR GERÄUSCHABHÄNGIGEN ANSTEUERUNG VON AGGREGATEN IN EINEM FAHRZEUG**
METHOD, DEVICE AND CONTROL UNIT FOR CONTROLLING UNITS IN A VEHICLE ACCORDING TO THE LEVEL OF NOISE
PROCEDE, DISPOSITIF ET UNITE DE COMMANDE POUR PILOTER DES GROUPES DANS UN VEHICULE, EN FONCTION D'UN BRUIT

(30) Priorität: 29.07.1999 DE 19935375
(43) Veröffentlichungstag der Anmeldung: 08.05.2002
(73) Patentinhaber: ROBERT BOSCH GMBH, 70442 Stuttgart (DE)
(72) Erfinder: GRABSCH, Hans-Peter, D-71034 Boeblingen (DE)
(86) Internationale Anmeldenummer: PCT/DE2000/002236
(87) Internationale Veröffentlichungsnummer: WO 2001/008928

(56) Entgegenhaltungen:
- DE-A- 4 429 373
- DE-A- 19 548 248
- DE-A- 19 608 992
- DE-C- 19 633 188
- FR-A- 2 692 709
- US-A- 5 108 159
- US-A- 5 203 178
- PATENT ABSTRACTS OF JAPAN vol. 017, no. 439 (M-1462), 13. August 1993 (1993-08-13) & JP 05 096929 A (ZEXEL CORP), 20. April 1993 (1993-04-20)
- Adcock J.: 'Lotus und das aktive Motorlager', Automobilrevue (CH), Nr. 40; 01.10.1992; Seite 10

## Beschreibung

### Stand der Technik

Die vorliegende Erfindung betrifft ein Verfahren und eine Vorrichtung sowie eine Steuereinheit zur Ansteuerung von Aggregaten in einem Fahrzeug gemäß den Oberbegriffen der unabhängigen Ansprüche.

Die Anzahl der in einem Fahrzeug eingebauten Aggregate nimmt ständig zu. Die Aggregate emittieren dabei Geräusche, die in bestimmten Betriebssituationen von den Insassen des Fahrzeugs als störend und lästig empfunden werden. Um diese störenden und lästigen Geräusche abzuschwächen werden die Aggregate mit komplexen Verfahren zur Geräuschminderung angesteuert.

In der DE 195 48 248 A1 wird dazu ein Verfahren und eine Vorrichtung zur Steuerung einer Pumpe eines elektrohydraulischen Bremssystems vorgeschlagen. Hierbei wird die Hydraulikflüssigkeit aus einem Druckspeicher über Ventile in die Radbremszylinder eingesteuert, wobei der Druckspeicher mit einer Pumpe geladen wird. Die Pumpe wird leistungsgeregelt derart angesteuert, daß das Laden des Druckspeichers durch die Pumpe möglichst geräuschlos erfolgt. Dies wird durch ein bedarfsgerecht vorgebbares Pulspausenverhältnis, insbesondere unter Berücksichtigung von Resonanzeffekten und/oder einem Druck im Druckspeicher erreicht. Dabei wird die Pumpe mit der situationsabhängig minimal notwendigen Leistung betrieben, um eine starke Geräuschentwicklung zu vermeiden.

Die DE 44 29 373 A1 zeigt die Ansteuerung eines weiteren Aggregats im Fahrzeug, eines elektromagnetischen Ventils, insbesondere einer Bremsanlage, welche ebenfalls unter der Vorgabe durchgeführt wird, die auftretenden Geräusche zu minimieren. Dies wird dadurch erreicht, daß bei dem üblichen Umsteuern von einer ersten in eine zweite Schaltstellung, insbesondere in Durchlaßrichtung, in einer ersten Phase für eine vorgebbare Zeit der Strom zur Ventilbetätigung gemäß einer bestimmten Funktion von einem ersten auf einen dritten Stromwert abfällt und in einer zweiten Phase annähernd konstant bleibt, wobei der dritte Stromwert über einen zweiten Stromwert liegt, der zur Erzielung der zweiten Schaltstellung dient. Auch hier ist ein komplexes Verfahren gezeigt, daß der Begrenzung der Geräuschentwicklung dient.

Eine Ansteuerung, die dem selben Zweck dient, eben der Geräuschreduzierung, ist in der DE 196 08 992 A1 dargestellt. Darin wird bei einer Generatoranlage als Aggregat für eine Brennkraftmaschine durch Absenken des Erregerstromes unter bestimmten Umständen die Geräuschentwicklung des Generators reduziert. Die Erregerstromabsenkung wird mit Hilfe eines Steuerteiles durchgeführt, welches aus zugeführten bzw. abgespeicherten Informationen die Bedingungen zur Absenkung ermittelt und entsprechende Ansteuersignale ausgibt. Dabei spielt die Generatortemperatur und der mittels eines Sensors erfaßte Körperschall des Generators eine Rolle. Auch hier wird ein sehr aufwendiges Verfahren verwandt, um die Geräuschemissionen des Generators gering zu halten.

Entsprechend dem Oberbegriff der unabhängigen Ansprüche zeigt und beschreibt die DE 196 33 188 C1 zeigt und beschreibt ein Verfahren und eine Einrichtung zur Ansteuerung wenigstens eines Aggregates in einem Fahrzeug, in Form eines Fensters oder Schiebedachs, wobei das durch das Aggregat verursachte Geräusch (Wummern) oder wenigstens eine dieses Geräusch verursachende Größe wie die Öffnungsgröße oder die Fahrgeschwindigkeit ermittelt wird. Dabei werden vorhandene Innenraumgeräusche im Fahrzeug ermittelt und/oder wenigstens eine diese repräsentierende Größe. Allerdings werden die Innenraumgeräusche und das Aggregatsgeräusch in diesem Stand der Technik nicht in Beziehung gesetzt, um Verdeckungseffekte bezüglich des Aggregatsgeräusches zu nutzen.

Es hat sich gezeigt, daß der genannte Stand der Technik nicht in jeder Hinsicht optimale Ergebnisse zu liefern vermag. So entsteht trotz aufwendiger Ansteuerverfahren ein Verlust von Abschnitten des möglichen Betriebsbereiches der im Fahrzeug enthaltenen Aggregate aufgrund der geräuschreduzierenden Maßnahmen. Ein gewisser Performanceverlust durch den Kompromiß zwischen funktionstechnisch minimal nötiger und geräuschtechnisch maximal erwünschter Ansteuerung kann somit im Stand der Technik nicht verhindert werden.

Andererseits werden die durch die Ansteuerung der Aggregate verursachten Geräusche in manchen Situationen nicht als störend empfunden bzw. sind aufgrund anderer Geräusche nicht wahrnehmbar. Dieser Effekt wird aber im Stand der Technik bei der Ansteuerung der Aggregate nicht berücksichtigt. Dabei sind die dabei zugrundeliegenden temporalen und spektralen Verdeckungseffekte in der Psychoakustik hinreichend bekannt und gut erforscht. Als Beispiel dafür seien die Fachbücher des Springer-Verlages "Psychoakustik" von 1982 und "Elektroakustik" von 1984 von E. Zwicker genannt. Darin werden auch die genannten Verdeckungseffekte beschrieben.

### Vorteile der Erfindung

Es stellt sich somit die Aufgabe, die bei der Ansteuerung der Aggregate entstehenden Geräusche, welche die Insassen des Fahrzeugs nicht willentlich beeinflussen können oder welche ein hohes Störpotential aufweisen, in zweckmäßiger Weise auftreten zu lassen. Gemäβ dem Verfahren nach Anspruch 1, der Vorrichtung nach Anspruch 7 und der Steuereinheit nach Anspruch 8 erfolgt dies genan dann, wenn diese durch Innenraumgeräusche des Fahrzeugs verdeckt werden, um die Fahrzeuginsassen nicht zu stören. Die Innenraumgeräusche können ebenso wenigstens anteilig Umgebungsgeräusche, Fahrgeräusche und/oder Betriebsgeräusche einzelner Aggregate, übrige Geräusche, wie Sprache, die durch die Insassen verursacht werden sowie durch im Innenraum angebrachte Geräte, wie beispielsweise Lüfter, Audiosysteme oder -komponenten, Computer usw. umfassen.

Die erfindungsgemäße Vorrichtung sowie die Steuereinheit und das Verfahren zur Ansteuerung wenigstens eines Aggregates in einem Fahrzeug, bei welchem Innenraumgeräusche auftreten, besitzen den Vorteil, daß dadurch das das Aggregat abhängig von den auftretenden Innenraumgeräuschen und/oder von wenigstens einer die Innenraumgeräusche des Fahrzeugs repräsentierenden Größe angesteuert wird, eine Reduzierung des tatsächlich möglichen Funktionsumfangs häufig vermieden werden kann ohne auf den Komfort bezüglich der Geräuschwahrnehmung verzichten zu müssen.

Dies bedeutet, daß zweckmäßigerweise in Geräuschbereichen bzw. den zugehörigen Betriebsbereichen, in denen sich die Geräuschentwicklung einzelner Aggregate im Fahrzeug durch das vorhandene, i.a. gewünschte Innenraumgeräusch verdecken bzw. maskieren läßt, die Aggregate in vollem Funktions- und Leistungsumfang betrieben werden können, ohne daß dadurch eine wahrnehmbare zusätzliche Geräuschentwicklung entsteht. Läßt sich das Aggregatgeräusch bei voller Funktion und Leistung nicht verdecken , können Funktion und Leistung, wenn möglich, geräuschlich optimal reduziert werden.

Vorteilhafterweise wird somit das Aggregat oder werden die Aggregate abhängig von der Korrelation zwischen dem durch das Aggregat verursachten Geräusch und/oder wenigstens einer dieses repräsentierenden Größe und den Innenraumgeräuschen und/oder wenigstens einer diese repräsentierende Größe angesteuert, also ein Ansteuersignal davon abhängig gebildet und/oder angepaßt.

Zweckmäßigerweise ist die Korrelation als ein Vergleich der jeweiligen Geräusche bzw. der diese repräsentierenden Größen ausgebildet. Dabei werden dann vorteilhafterweise Verdeckungseffekte der Innenraumgeräusche bzw. der diese repräsentierenden Größen verwendet.

Um dabei zweckmäßigerweise alle Verdeckungseffekte nutzen zu können wird spektrale und/oder temporale Information des durch das Aggregat verursachte Geräusches und der Innenraumgeräusche ermittelt und diese dann vorteilhafterweise korreliert. Dadurch kann beispielsweise eine Nachverdeckung und/oder eine simultane Verdeckung und/oder eventuell auch eine Vorverdeckung durch die Innenraumgeräusche als Effekt genutzt werden.

Vorteilhafterweise werden die Innenraumgeräusche und die durch das Aggregat bzw. die Aggregate verursachten Geräusche durch eine Schallgröße, wie beispielsweise Schalldruck und/oder Lautheit, repräsentiert. Die Berücksichtigung spektraler und/oder temporaler Information gelingt dabei jeweils durch die zweckmäßige Verwendung eines Schallgrößenpegels bzw. unter Nutzung von psychoakustischen Größen, wie z.B. von spezifischen Lautheiten, über der Zeit und/oder der Frequenz.

Somit trägt eine Reduzierung störender Geräusche oder Geräuschkomponenten vorteilhafterweise neben dem Fahrkomfort zur Fahrsicherheit bei, weil eine Ablenkung durch die Störgeräusche zumindest vermindert wenn nicht gänzlich ausgeschlossen wird.

Von Vorteil ist weiterhin, daß auch eventuell aus Kostendruck oder steigenden Leistungsanforderungen geräuschlich nicht optimierte Aggregate und deren Ansteuerungen geräuschmäßig unauffällig betrieben werden können.

Weitere Vorteile sind den Merkmalen der Ansprüche und der Beschreibung zu entnehmen.

### Zeichnung

Die Erfindung wird im Weiteren anhand der dargestellten Figuren näher erläutert. Dabei zeigt Figur 1 ein Bremssystem in allgemeiner Form, in welchem verschiedene Aggregate angesteuert werden. Figur 2 offenbart ausgehend von einem Antriebssystem eine Vielzahl damit zusammenhängender, aber getrennt ansteuerbarer Aggregate. In Figur 3 sind in Form eines Flußdiagramms allgemein Verfahren zur erfindungsgemäßen Ansteuerung wenigstens eines Aggregates dargestellt. Figur 4, bestehend aus Figur 4a und 4b zeigt dazu schematisch eine Darstellung der Verdeckung von Aggregatsgeräuschen. In Figur 5 ist eine zeitliche Abfolge von Innenraumgeräusch und Aggregatsgeräusch mit erfindungsgemäßer Ansteuerung offenbart. Figur 6, bestehend aus Figur 6a, 6b, 6c und 6d schließlich zeigt verschiedene Möglichkeiten einer erfindungsgemäßen Vorrichtung zur Realisierung der Verfahrensschritte.

### Beschreibung der Ausführungsbeispiele

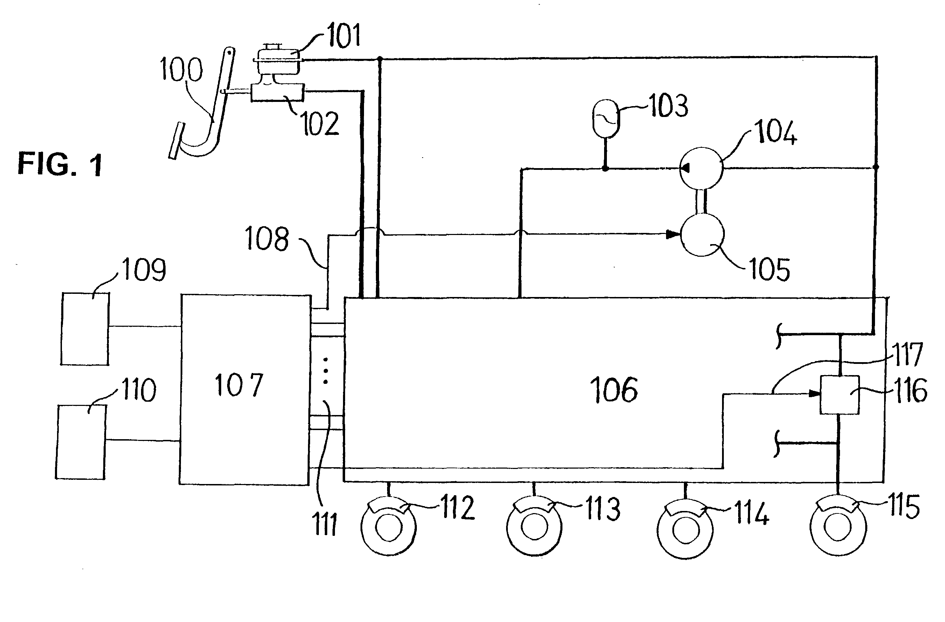

Figur 1 zeigt ein Bremssystem, insbesondere ein elektrohydraulisches Bremssystem, bei dem die Bremsflüssigkeit aus einem Druckspeicher 103 über Ventile 116 in Radbremszylinder 112 bis 115 eingesteuert wird. Der Druckspeicher wird mit einem das Druckmedium förderndes Mittel in Form einer Pumpe 104 geladen. Dieses Laden soll möglichst ohne wahrnehmbare Geräuschentwicklung geschehen.

In dem dargestellten Bremssystem ist ein Bremspedal 100 dargestellt, welches mit einem Hauptbremszylinder 102 in Verbindung steht. Über das Bremspedal kann Druck in dem Hauptbremszylinder 102 aufgebaut werden. Der Hauptbremszylinder 102 steht mit einem Vorratsbehälter 101 in Kontakt. Aus dem Hauptbremszylinder 102 sowie dem Vorratsbehälter 101 führen Leitungen für das Druckmedium in die Bremsanlage 106. Die Bremsanlage 106 umfaßt Ventilmittel und mögliche Drucksensorik sowie im Falle eines elektrohydraulischen Bremssystems einen möglichen Pedalwegsimulator sowie übrige aus dem Stand der Technik bekannte Komponenten je nach Ausführungsform des Bremssystems. In einer Leitung zwischen dem Vorratsbehälter 101 und der Bremsanlage 106 ist das, das Druckmedium fördernde Mittel, in Form der Pumpe 104 dargestellt. Mit 105 ist ein Antrieb zur Betätigung der Pumpe beispielsweise in Form eines Elektromotors dargestellt. Somit wir in diesem Ausführungsbeispiel durch Pumpe 104 und Pumpenmotor 105 ein Aggregat gebildet. Zwischen der Pumpe 104 und der Bremsanlage 106 ist ein Druckspeicher 103 angebracht. Beispielhaft ist mit 116 ein Ventilmittel in der Bremsanlage, hier zwischen Vorratsbehälter 101 und Radbremszylinder 115 dargestellt. Die weiteren Ventilmittel der Bremsanlage 106 sind aus Gründen der Übersichtlichkeit weggelassen. Über Leitungen für das Druckmedium steht die Bremsanlage 106 mit den Radbremszylindern 112 bis 115 in Verbindung. Die Steuerung bzw. Regelung der steuerbaren bzw. regelbaren Komponenten des Bremssystems, insbesondere des Motor-Pumpen-Aggregats, ist durch die Steuereinheit 107 repräsentiert. Die von der Steuereinheit 107 wegführenden bzw. hinführenden Verbindungen mit der entsprechenden Aktuatorik und/oder Sensorik sind schematisch in Leitungsbündel 111 angedeutet. Lediglich die Ansteuerleitungen 108 für den Pumpenmotor 105, und die Leitung 117 des Ventils 116, als weiteres Aggregat, sind dabei herausgehoben. Mit 109 ist weitere Bremssystem-externe Sensorik dargestellt. Element 110 repräsentiert weitere mögliche Steuereinheiten, welche in Verbindung mit der Steuereinheit 107 des Bremssystems stehen. Dabei kann beispielsweise durch Steuereinheit 110 ebenfalls eine Zusatzeinheit zur geräuschabhängigen Steuerung vorgesehen sein. Ebenso kann aber das erfindungsgemäße Verfahren auch in Steuereinheit 107 ablaufen wobei in Sensorik 109 beispielsweise eine Innenraumsensorik zur Geräuscherfassung enthalten sein kann. Über die Sensorik 109 werden somit beispielsweise Größen wie Fahrzeuggeschwindigkeit und/oder Motordrehzahl und/oder Umgebungsgeräusche und/oder Betriebsgeräusche von Aggregaten und/oder Innenraumgeräusche erfaßt. Vergleichbare Informationen können aber auch über andere Steuereinheiten 110 abgefragt und an die Steuereinheit 107 des Bremssystems übermittelt werden. Abhängig von den so erfaßten Größen bzw. Geräuschen können nun die Aggregaten des Bremssystems angesteuert werden. Beispielhaft herausgegriffen sind dabei wie genannt die Pumpe 104 mit zugeordnetem Pumpenmotor 105, welcher über Leitung 108 angesteuert wird, sowie ein exemplarisch dargestelltes Ventilmittel 116, welches über Leitung 117 geregelt wird.

Dabei wird der Pumpenmotor 105 getaktet angesteuert. Das dem Takten der Pumpe 104 bzw. des Pumpenmotors 105 zugrundeliegende Pulspausenverhältnis PPV kann dabei in Abhängigkeit der Innenraumgeräusche und der Betriebsgeräusche der Aggregate bzw. der diese Geräusche repräsentierenden Größen, wie Schallgrößen (Schalldruck, Schallintensität, etc.) variiert werden; dabei sind diese miteinander korreliert. Die Ansteuerung des Ventils kann ebenfalls davon abhängig durchgeführt werden. Dabei sind vornehmlich solche Ventile gemeint, die zwar angesteuert werden, aber nicht sofort einen ungewünschten Bremsdruckauf oder -abbau im Fahrbetrieb nach sich ziehen bzw. sind alle Ventile des Bremssystems möglich wenn eine Bremsdruckänderung in Form von Aufbau oder Abbau gewünscht ist. Bei Einsatz von z.B. linearen Ventilen, also Ventilen die nicht nur über eine Offen- und ein Geschlossen-Stellung verfügen, sondern bei denen z.B. durch gepulste bzw. getaktete Ansteuerung ein beliebiger Öffnungsquerschnitt und damit eine beliebige Durchflußmenge an Druckmedium vorgebbar ist kann die Ansteuerung analog zur Ansteuerung der Pumpe erfolgen.

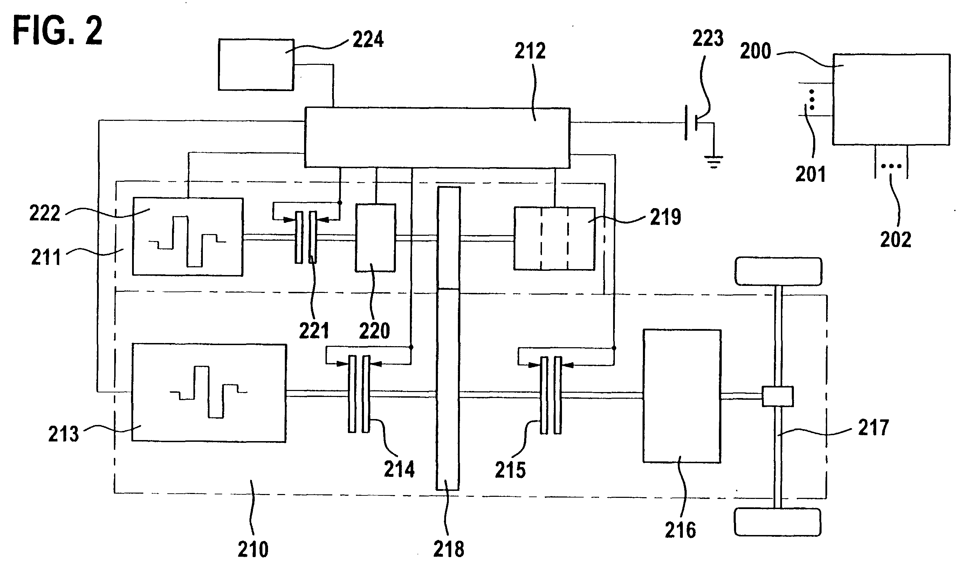

Aus der Figur 2 ist ein Antriebssystem für Kraftfahrzeuge erkennbar, welches aus einem Hauptantriebsstrang 210 und einem Nebenantriebsstrang 211 sowie einer gemeinsamen elektrischen Steuerung und Versorgung 212 im Bordnetz des Kraftfahrzeuges besteht. Der Hauptantriebsstrang enthält eine Brennkraftmaschine 213 als Hauptantrieb, eine Hilfskupplung 214 am Abtrieb der Brennkraftmaschine 213, eine Fahrkupplung 215 und ein nachgeordnetes Fahrzeuggetriebe 216, dessen Ausgangswelle mit einer Antriebsachse 217 des Kraftfahrzeugs fest verbunden ist. Zwischen der Fahrkupplung 215 und der Hilfskupplung 214 im Hauptantriebsstrang 210 befindet sich ein Zwischengetriebe 218, welches den Hauptantriebsstrang 210 mit dem Nebenantriebsstrang 211 verbindet. Im Nebenantriebsstrang 211 befinden sich mehrere anzutreibende Nebenaggregate 219, wie beispielsweise eine Kühlwasserpumpe, eine Ölpumpe für den Schmiermittelkreislauf des Kraftfahrzeugs, eine Pumpe für eine Servolenkung sowie ein Kompressor für eine auch bei stehendem Fahrzeug und gegebenenfalls bei abgeschaltetem Hauptantrieb arbeitende Klimaanlage. Ferner befindet sich im Nebenantriebsstrang 211 ein Aggregat in Form des mit dem Zwischengetriebe 218 fest verbundenen Starter-Generators 220, an dem über eine Schaltkupplung 221 ein Nebenaggregatantrieb 222 gekoppelt ist. Als Nebenaggregatantrieb 222 dient hier eine weitere Brennkraftmaschine, deren Leistung z.B. weniger als halb so groß wie die der Brennkraftmaschine 213 im Hauptantriebsstrang 210 ist. Die elektrische Steuerung und Versorgung 212 ist über elektrische Leitungen unter anderem mit der Hilfskupplung 214, der Fahrkupplung 215, der Schaltkupplung 221, mit dem Starter-Generator 220 und wenigstens zum Teil mit den Nebenaggregaten 219 verbunden. Sie ist ferner zur Temperaturerfassung mit der Brennkraftmaschine 213 und dem Nebenaggregatantrieb 222 verbunden. Desweiteren ist an der elektrischen Steuerung und Versorgung 212 im Bordnetz des Kraftfahrzeuges eine Akkumulatorbatterie 223 als elektrischer Energiespeicher sowie weitere Sensorik 224, wie z.B. eine Fernbedienung, ein Gaspedalsensor oder ein Schaltkontakt in der Fahrertür des Kraftfahrzeuges oder Innenraumsensorik sowie optional Aggregatsgeräuschsensorik angeschlossen. Optional könnte mit Einheit 200 aber auch ein Innenraumelement, wie ein Audiogerät oder eine Kommunikationseinrichtung oder ein Fahrleitsystem im Fahrzeug vorgesehen sein,das z.B. bereits über Innenraumsensorik verfügt. Die Einheit 200 könnte aber auch eine zusätzliche Steuereinheit darstellen, die über die Ausgangsleitungen 201 und die Eingangsleitungen 202 selbstständig u.a. Sensorsignale empfängt und einzelne Aggregate oder mehrere Aggregate im Verbund geräuschabhängig, also abhängig vom Innenraumgeräusch und Aggregategeräusch bzw. der diese repräsentierenden Größen ansteuert.

Nachfolgend wird nunmehr die Arbeitsweise des erfindungsgemäßen Antriebssystems näher beschrieben. Durch die Ansteuerung der drei vorerwähnten Kupplungen 214, 215 und 221 ist das Zwischengetriebe 218 mit dem Nebenantriebsstrang 211 durch Öffnen der Fahrkupplung 215 und der Hilfskupplung 214 vollständig von der Brennkraftmaschine 213 als Hauptantrieb einerseits und von der Antriebsachse 217 andererseits entkoppelbar. Damit und durch vorgenannte Kupplungen können die Aggregate selbständig oder in beliebigem Verbund angesteuert werden. So kann auch über den Nebenaggregatantrieb 222 und den Starter-Generator 220 bei geschlossener Schaltkupplung 221 sowohl Strom erzeugt als auch mechanische Leistung an den Nebenaggregaten 219 abgegeben werden. Dadurch wird eine flexible und verbrauchsoptimale Versorgung elektrischer und anderer Verbraucher erreicht.

Viele dieser in Figur 1 und 2 gezeigten Aggregate emittieren unerwünschte Geräusche, müssen aber nicht ständig betrieben werden. Vor allem müssen die Aggregate nicht ständig in einem für das Hörempfinden bzw. die Wahrnehmung ungünstigen Zustand betrieben werden. Wie dargestellt können die Aggregate beliebig, auch im Verbund oder einzeln angesteuert werden. Berücksichtigt man sicherheitsrelevante Ansteuerungen mit höherer Priorität, können aber besonders Geräusche, die der Fahrer bzw. die Fahrzeuginsassen nicht willentlich beeinflussen können oder die ein hohes Störpotential haben so gesteuert werden, daß sie bevorzugt dann auftreten, wenn sie durch die Innenraumgeräusche im Fahrzeug verdeckt bzw. maskiert werden bzw. daß ihre Funktion oder Leistung derart gesteuert wird, daß die Aggregatgeräusche gerade eben verdeckt bzw. maskiert werden um die Insassen nicht zu stören und gleichzeitig dadurch kein Verlust an Sicherheit entsteht. Andererseits trägt eine Reduzierung störender Geräusche oder Geräuschkomponenten neben dem Fahrkomfort zur Fahrsicherheit bei, weil eine Ablenkung durch die Störgeräusche vermindert, wenn nicht ausgeschlossen wird.

Im weiteren werden die vorgenannten, je nach Ausführungsform des Fahrzeugs, in diesen vorhandenen Bauelemente und/oder Baugruppen und/oder Maschinen allgemein als Aggregate bezeichnet.

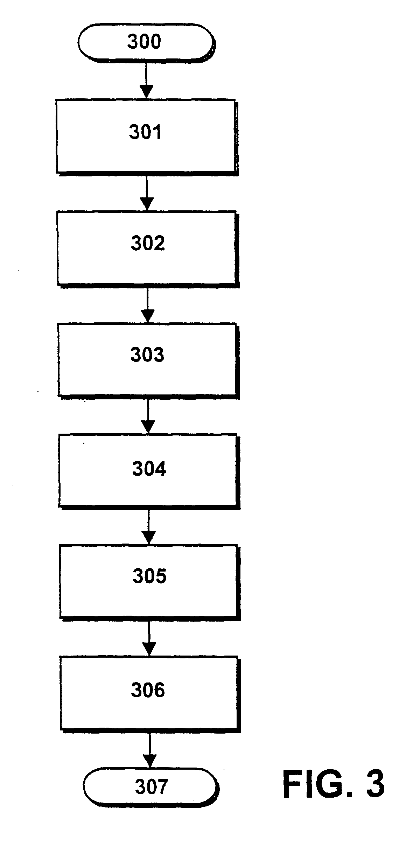

In Figur 3 ist allgemein ein Verfahren zur Ansteuerung wenigstens eines Aggregates im Fahrzeug dargestellt. Grundlage für die geräuschabhängige Aggregatsansteuerung ist wie bereits genannt die Vorgabe, daß solche Geräusche von Aggregaten, die der Fahrer bzw. Fahrzeuginsassen nicht wissentlich beeinflussen kann und/oder die ein hohes Störpotential besitzen, zweckmäßigerweise dann auftreten sollten, wenn sie durch das Innenraumgeräusch des Fahrzeugs verdeckt werden und/oder so in ihrer Funktion und/oder Leistung gesteuert werden, daß die Aggregatgeräusche gerade eben verdeckt werden, um die Fahrzeuginsassen nicht zu stören. Im Block 300 erfolgt dazu der Start des allgemeinen Verfahrens. In Block 301 erfolgt die Ermittlung des oder der Innenraumgeräusche und/oder die Ermittlung von Hilfsgrößen aus denen sich mittels Vorwissen (z.B. Datenbasis, Wissensbasis bei Expertensystem) Innenraum- oder Aggregatgeräusch-Kennwerte ableiten lassen, wie sie später in Block 303 erzeugt und in Block 304 verwendet werden können. Dazu können einerseits bestehende Systeme verwendet werden, wie beispielsweise die Sensorik 109 bzw. 224, also z.B. ein Mikrofon, einer Freisprechanlage eines fahrzeuginternen Kommunikationsgerätes oder andere bereits im Fahrzeug vorhandene Sensorik, wie das Mikrofon eines Fahrzeug-PC oder das in ein High-End Audiosystem im Fahrzeug integrierte. Andererseits ist eine solche Sensorik, beispielsweise in Form von Mikrofonen oder Körperschallsensoren, z.B. durch Vibration bzw. Resonanz, gezielt nachrüstbar. Ebenso können im Block 301 die Geräusche der Aggregate bzw. das Geräusch wenigstens eines Aggregates mittels Sensor erfaßt werden. Dazu kann beispielsweise ebenfalls ein Mikrofon oder Körperschallsensorik dienen. Je nach noch zu erläuternder Ausführungsform des vorgestellten Verfahrens werden im Block 301 Aggregatgeräusch sowie Innenraumgeräusch entweder beide durch Sensorik erfaßt oder jeweils eines ermittelt wobei das andere durch einen Sensor erfaßt wird oder es werden beide Geräusche ohne vorhandenen Sensor lediglich ermittelt. Bei der Verwendung des Begriffes Aggregatgeräusch kann dies entweder das durch ein Aggregat hervorgerufene Geräusch mit oder ohne zugehörigen Resonanzeffekten durch Körperschallübertragung bzw. die jeweiligen Geräusche mehrerer Aggregate oder auch das Summengeräusch vieler bzw. aller Aggregate bedeuten. Das Geräusch kann aber auch durch eine diese repräsentierende Größe wie eine Schallgröße oder Luftdichtegröße (z.B. durch Luftdichteschwankungen) oder z.B. Lautheit dargestellt werden. Die Ursache für vorgenanntes Summengeräusch liegt beispielsweise in der Verwendung eines Sensors zur Aufzeichnung der Geräusche mehrerer Aggregate. Nach der Erfassung bzw. Ermittlung der Geräusche werden diese im Block 302 weiterverarbeitet. Dies geschieht beispielsweise bei analoger Geräuschaufzeichnung durch eine im Block 302 durchgeführte Analog/Digital-Wandlung. Eine weitere Aufarbeitung der in 301 erfaßten Signale kann in 302 dadurch bestehen, daß nicht hörbare Bereiche der erfaßten bzw. ermittelten Geräusche bereits ausgeblendet werden, womit sie für das weitere Verfahren keine Rolle spielen.

Im nachfolgenden Block 303 werden die Signale, welche die Geräuschinformation enthalten mittels psychoakustischer Signalanalyse zur spektralen und/oder temporalen Verdeckung bzw. Maskierung aufbereitet. Dabei werden einerseits Verdeckungsspektren gebildet bzw. ermittelt und andererseits die Zeit des Auftretens des oder der Aggregatsgeräusche in Beziehung zum Zeitverlauf der Innenraumgeräusche gesetzt. Es können also insbesondere Vorhörschwellen und/oder Mithörschwellen und/oder Nachhörschwellen ermittelt werden, wodurch zusätzlich zur simultanen Verdeckung, also dem gleichzeitigen Auftreten von Stör- und Nutzschall, eine Analyse bezüglich Nachverdeckung und/oder eventuell auch Vorverdeckung (z.B. bei Geräuschen deren Auftrittszeit und/oder -frequenz bereits vorher wenn auch nur sehr kurzzeitig bekannt ist) erfolgen kann. Hierzu werden insbesondere die spezifischen Lautheiten verwendet.

Im nachfolgenden Block 304 werden die so aufbereiteten Signale dann miteinander verglichen. Je nach später noch zu erläuternder Ausführungsform wird beispielsweise das so aufbereitete Innenraumgeräusch bzw. das dieses beschreibende Signal oder Größe mit einer Datenbasis bezüglich der Geräuschentwicklung der zu steuernden Aggregate verglichen. Außerdem lassen sich für den Vergleich notwendige Daten, wie z.B. Spektren von Aggregaten, auch aus der Datenbasis ermitteln, wenn nur Hilfsgrößen zur Verfügung stehen.

Ausgehend von diesem Vergleich wird im Block 305 durch einen Entscheidungsalgorithmus die Ansteuerung des jeweiligen Aggregates festgelegt. Dabei kann eine Zusatzinformation verwendet werden, welche beinhaltet, ob das Aggregat bereits eingeschaltet ist oder nicht bzw. wie es augenblicklich angesteuert wird, beispielsweise durch Einlesen eines aktuellen Pulspausenverhältnisses PPV z.B. bei einer Pumpenansteuerung.

Auf Grundlage des Entscheidungsalgorithmus im Block 305 wird dann im Block 306 die Ansteuerung des Aggregates gebildet und/oder angepaßt. Beispielsweise bei hohem Innenraumgeräuschpegel bzw. zugehöriger Verdeckung kann ein Aggregat schon mal im Vorfeld eingeschaltet werden bzw. mit höherer Leistung betrieben werden, ohne daß dies von den Fahrzeuginsassen störend bemerkt wird. Solch ein Aggregat kann beispielsweise die Speicherpumpe in einem Bremssystem sein, durch welche der Speicher mit Druckmedium gefüllt wird. Ebenso kann dies eine Kraftstoffpumpe sein oder die zusätzliche Brennkraftmaschine aus Figur 2 ebenso wie die übrigen bereits genannten Aggregate. Zur Ansteuerung selbst kann beispielsweise ein Einschaltimpuls, ein Ausschaltsignal oder auch ein spezielles Pulspausenverhältnis bzw. eine gewünschte Leistung vorgegeben werden. Im Anschluß an Block 306 gelangt man zum Verfahrensende im Block 307.

Die Durchlaufzeit vom Verfahrensstart in Block 300 bis zum Ende in Block 307 ist beispielsweise vorgebbar. Bei der Vorgabe können Abtastzeiten für die Signale, Rechen- und Verarbeitungszeiten im System eine Rolle spielen. Das Verfahren kann einerseits ständig im Hintergrund mitlaufen bzw. betrieben werden oder auch nur dann zugeschaltet werden, wenn Aggregate bzw. das Aggregat angesteuert werden sollen. Auch ein gewünschtes Zu- oder Abschalten des Verfahrens durch die Insassen ist denkbar.

Wie schon angedeutet, sind im Verfahren verschiedene Ausführungsformen möglich. Im ersten Fall wird lediglich das Innenraumgeräusch mittels Sensorik erfaßt. Die Geräuschdaten der einzelnen Aggregate stehen aus Vorversuchen und/oder Simulationen, also als Labordatenbasis zur Verfügung. Diese Datenbasis kann insbesondere über Fahrversuche und Sensoraufzeichnung der durch die Aggregate emittierten Geräusche ermittelt werden. Somit werden im Block 303 die Verdeckungsspektren des Innenraumgeräusches gebildet. Ebenso wird optional die temporale Analyse durchgeführt. Dies geschieht in diesem Fall, in dem die schon benannte Zusatzinformation, ob und wie das Aggregat angesteuert wird, bereits verwendet wird. Somit kann dann ein Datenvergleich von Innenraumgeräusch und Geräuschdatenbasis des wenigstens einen Aggregates durchgeführt werden. Und schließlich die Ansteuerung des Aggregates gebildet bzw. angepaßt werden.

Eine zweite Möglichkeit besteht darin, die Innenraumgeräusche und die Geräusche des wenigstens einen Aggregates mittels Sensorik zu erfassen. Die Geräusche bzw. die sie beschreibenden Signale bzw. Größen können dann spektral und/oder temporal zueinander in Beziehung gesetzt werden. Abhängig davon, ob das oder die durch die Aggregate emittierten Geräusche durch die Innenraumgeräusche verdeckt bzw. maskiert werden, werden dann ebenfalls das oder die Aggregate entsprechend angesteuert.

Eine weitere Möglichkeit besteht darin, nur das Innenraumgeräusch aufzuzeichnen und diese mit Datenbasen bezüglich des Innenraumgeräusches ohne Störgeräusche zu vergleichen. Die Datenbasis umfaßt in diesem Fall eine Vielzahl von Geräuschkulissen im Innenraum, welche durch einerseits das aktuelle Innenraumgeräusch und/oder andererseits durch die Information, ob und wie Innenraumelemente wie Audiogeräte oder ein Fahrzeug-PC betrieben werden. Ist die Geräuschkulisse aus der Datenbasis identifiziert können die Störgeräusche herausgefiltert werden. Diese können dann dem oder den Aggregaten zugeordnet werden und durch gezielte Ansteuerung verringert werden.

Zusätzlich zu den genannten Möglichkeiten bietet sich die Verwendung eines lernenden Systems an. Ausgehend von vorgefertigten Datenbasen werden diese ständig, im gesamten Lebenszyklus des Fahrzeugs überarbeitet oder neu konfiguriert. Dadurch entsteht bei Benutzung des Fahrzeugs durch einen eingeschränkten Personenkreis eine auf die individuelle Geräuschkulisse abgestimmte Ansteuerung der geräuschemitierenden Aggregate.

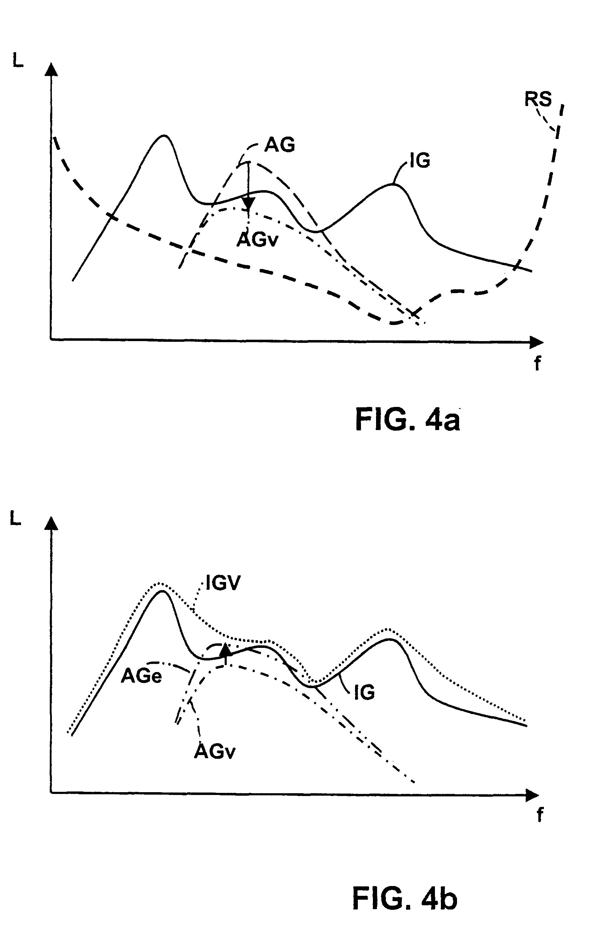

In Figur 4, bestehend aus Figur 4a und 4b, ist das eben Beschriebene bezüglich der Verdeckung noch einmal schematisch dargestellt. Dabei ist der Pegel L der Geräusche, z.B. der Schallpegel oder Schallintensitätspegel, über der Frequenz f aufgetragen. Eine weitere Verbesserung des Verfahrens bzw. der Vorrichtung ist zu erzielen, wenn unter Hinzunahme psychoakustischer Effekte Verdeckungskurven wie in Fig. 4b schematisch dargestellt eingesetzt werden. Für die Ermittlung von Verdeckungskurven eignet sich das psychoakustische Verfahren der Lautheitsberechnung. Dabei können beispielsweise spezifische Lautheiten und deren Verdeckungskurven ermittelt werden, vergleichbar der Verdeckungskurve IGV in Figur 4b. Diese Überlegungen werden im Weiteren wenn möglich bzw. nötig vorausgesetzt.

In dieser Spektraldarstellung nach Figur 4 ist mit RS schematisch eine Ruhehörschwelle dargestellt. IG zeigt dabei beispielhaft einen Pegelverlauf eines Innenraumgeräusches über der Frequenz f. Dieser setzt sich beispielsweise zusammen aus Tonsignalen, wie Musik, welche wie aus dem Stand der Technik bekannt, eine relativ breitbandige Verdeckung liefert. Hinzu kommt die Pegel-Information, z.B. des Lautsärkepegels der Musik, der einzelnen Frequenzbereiche. Ebenso kann in IG eine Unterhaltung zweier oder mehrerer Personen umfaßt sein. Weitere einen Anteil zu IG liefernde Geräusche sind beispielsweise Umgebungsgeräusche und/oder Betriebsgeräusche des Fahrzeugs welche zumindest anteilig in den Innenraum dringen. Dies können beispielsweise Radrollgeräusche, durch den Fahrwind hervorgerufenen Geräusche, äußere Einflüsse, wie Geräusche einer Baustelle oder ähnliches sowie Betriebsgeräusche des Hauptantriebs im Fahrzeug sein.

In Figur 4a ist dabei mit AG das Betriebsgeräusch eines Aggregates dargestellt. Zunächst wird also erkannt, daß das Aggregatsgeräusch AG durch das Innenraumgeräusch IG nicht verdeckt, bzw. bei Betrachtung von Pegeln nicht überlagert wird. Daraufhin wird das Aggregat, natürlich unter Berücksichtigung der Sicherheit bei sicherheitsrelevanten Aggregaten, derart angesteuert, daß sich die Geräuschentwicklung von AG zu AGv verringert. Die verringerte Geräuschentwicklung des Aggregates AGv wird dann durch das Innenraumgeräusch IG verdeckt und nicht mehr als störend empfunden. Dies kann, wie schon gesagt, entweder durch Ausschalten des Aggregates oder durch Ansteuerung mit verminderter Leistung bzw. Funktionsumfang geschehen. Eine weitere Möglichkeit besteht darin, durch Änderung der Ansteuerfrequenz bzw. des Pulspausenverhältnisses Resonanzanregungen, die ebenfalls zu erhöhten Geräuschemission führen, zu vermeiden. Neben der Betrachtung von Pegeln, kann wie genannt eine weitere Verbesserung erzielt werden, wenn durch vorgenannte Maßnahmen die Verdeckung, also psychoakustische Zusatzeffekte, wie z.B. in der Lautheit, berücksichtigt werden.

In Figur 4b sind dazu wieder das Innenraumgeräusch IG und das Aggregatsgeräusch AG, diesmal bereits vermindert als AGv dargestellt. Weiterhin ist eine Verdeckungskurve bezüglich des Innenraumgeräusches IGV eingezeichnet. An dieser Stelle sei noch einmal auf die einleitenden Überlegungen zu Figur 4 verwiesen. Man erkennt, daß unter Einbeziehung zusätzlicher Effekte, woraus sich die Verdeckungskurve IGV ermitteln läßt, die Möglichkeit gegeben ist z.B. AGv in den Verdeckungsbereich zu erhöhen (AGe). Dadurch ist beispielsweise eine Ansteuerung des Aggregates mit höherer Leistung möglich als bei reiner Pegelbetrachtung. Dadurch emittiert das Aggregat z.B. dann das Geräusch AGe.

Die für ein Aggregat angestellten Überlegungen und Verfahren bzw. Verfahrensschritte können natürlich für mehrere Aggregate ebenso eingesetzt werden, ob diese geräuschmäßig nun separat erfaßt oder auch ein Summengeräusch mehrerer oder aller Aggregate zugrundegelegt wird.

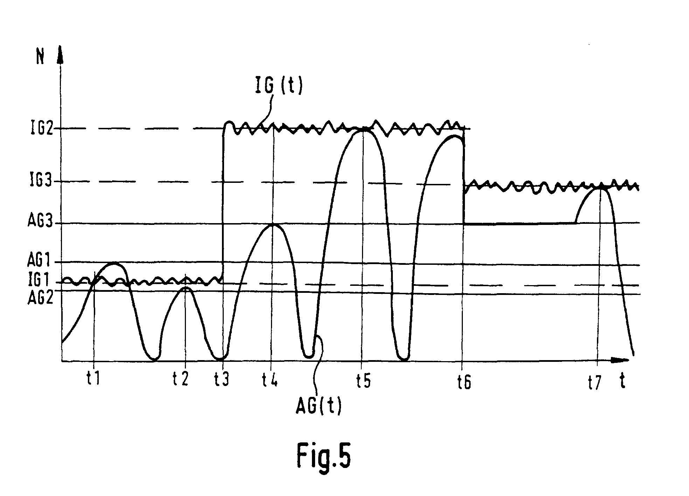

Figur 5 zeigt die Lautheit N des Innenraumgeräusches, wobei der Pegel L wie vorhergehende Überlegungen zeigen ebenfalls möglich wäre, über der Zeit t; IG(t) ist dabei gestrichelt dargestellt. Die Lautheit ist dabei z.B. für stationäre Geräusche schon genormt, und berücksichtigt Verdeckungen. Zum Zeitpunkt t3 wird der normale Lautheitswert des Innenraumgeräusches von beispielsweise IG1, hervorgerufen durch Fahrgeräusche und/oder beispielsweise Gesprächsgeräusche der Insassen, durch Einschalten eines Innenraumelementes, wie einem Audiogerät auf IG2 erhöht. Mit AG(t) ist beispielhaft eine periodische Geräuschentwicklung dargestellt. Zum Zeitpunkt t1 wird ein Überschreiten der Innenraumverdeckungskurve bzw. der Lautheit IG1 und/oder des Geräuschpegels festgestellt. Beispielsweise aus Sicherheitsgründen kann das Geräusch des Aggregats zum Zeitpunkt t1 nicht sofort unterhalb Wert IG1 gedrückt werden. Bei der nächsten Ansteuerung, wenn die Sicherheit es zuläßt, wird das Aggregat nunmehr derart angesteuert, daß das dabei entstehende Geräusch zum Zeitpunkt t2 unterhalb der Innenraumgeräuschverdeckungskurve und damit unter die Lautheit IG1 zu liegen kommt. Zum Zeitpunkt t3 wird die Erhöhung auf den Wert IG2 ermittelt. Dadurch kann zum Zeitpunkt t4 das Aggregat mit der vorgesehenen Leistung und der dabei entstehenden Geräuschemission angesteuert werden. Die nächste Ansteuerung kann sogar dann soweit erhöht werden, daß ein Geräusch (AG4) entsteht, das immer noch unterhalb des Geräuschwertes IG2 liegt. Durch Reduzierung des Geräusches IG2, z.B. durch Reduzierung der Lautstärke beispielsweise des Audiogerätes zum Zeitpunkt t6, würde das Geräusch AG4 wieder deutlich im Innenraum zu hören sein. Deshalb wird bei Erkennen dieser Geräuschzusammenhänge die Ansteuerung des Aggregats derart verringert, daß das Geräusch ebenfalls von AG4 schneller sinkt. Dafür kann beispielsweise nachfolgend über längere Zeit ein geringereres Grundgeräusch, beispielsweise wieder AG3 aufrechterhalten werden. Zum Zeitpunkt t7 erfolgt die erneute Steigerung des Geräusches bis zu einer Lautheit IG3.

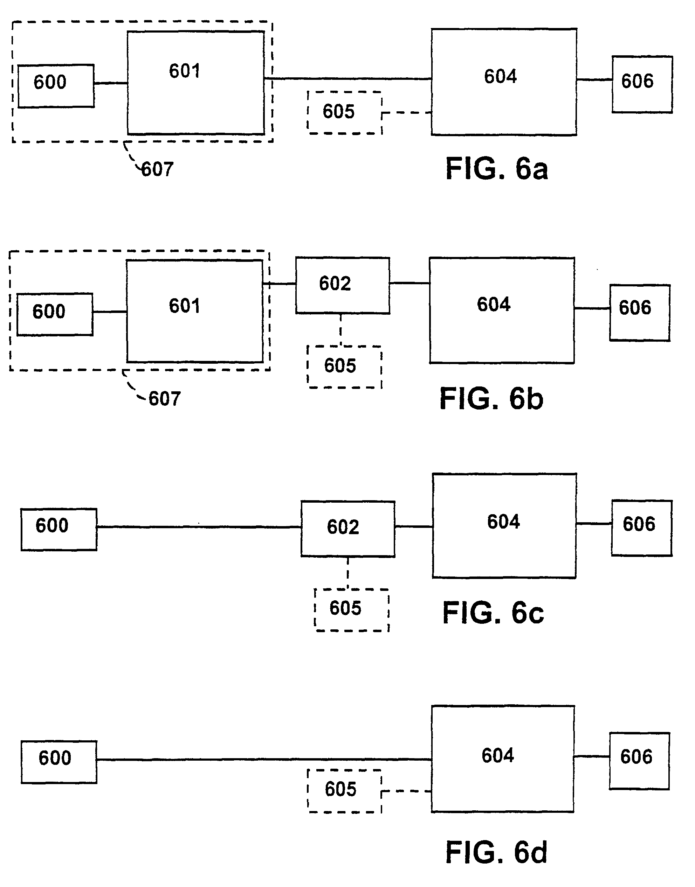

Figur 6 zeigt nun den Einsatz verschiedener Module bzw. Einheiten zur Durchführung des Verfahrens. In Figur 6a ist mit Block 600 die Innenraumsensorik dargestellt. Block 601 stellt eine Signalverarbeitungseinheit dar. Dies kann im einfachsten Fall beispielsweise ein AD-Wandler sein oder aber eine aufwendigere Verarbeitung beispielsweise in einem Autoradio, Navigationsgerät, Fahrzeug-PC oder einem Kommunikationssystem. Diese Einheit stellt damit das Innenraumelement 607 dar, wenn die Innenraumsensorik in der Verarbeitungseinheit 601 bereits integriert ist. Durch das Innenraumelement 607 werden somit die Verfahrensschritte 301, 302 und eventuell auch je nach Ausführungsform 303 durchgeführt. Die Verdeckungsanalyse im Block 303 kann aber ebensogut in der Steuereinheit 604 des Aggregates 606 durchgeführt werden. Optional dient dazu, wie vorher im Verfahren beschrieben, die Aggregatssensorik 605 zur Erfassung der Geräuschinformation des anzusteuernden Aggregates.

Durch die dargestellten Elemente 600, 601 bzw. 607 sowie 604 und 606 und optional 605 kann eine Geräuschregelung durchgeführt werden. Da durch Verwendung der vorher beschriebenen Datenbasen auch eventuell unscharfe Zustände entstehen können, kann man beispielsweise zur Regelung einen Fuzzy-Regler verwenden. Die Rückkopplung der Regelung erfolgt somit durch die jeweils nach Ausführungsform erfaßten Geräusche, also entweder Innenraumgeräusch und/oder Aggregatsgeräusch.

In Figur 6b ist in diese Anordnung, beispielsweise zum Nachrüsten eines bestehenden Systems die Zusatzeinheit 602 eingefügt. Diese kann die Verfahrensschritte 303, 304 und 305 enthalten und gibt lediglich an die Steuereinheit des Aggregates 604 die zur Anpassung und/oder Bildung des Ansteuersignals notwendigen Signale aus. Die optionale Aggregatsensorik 605 ist dann an das Zusatzgerät 602 angeschlossen. Kann die Verdeckungsanalyse nach Verfahrensschritt 303 allerdings im Innenraumelement 607 durchgeführt werden, so bearbeitet die Zusatzeinheit lediglich die Verfahrensschritte 304 und 305.

Ist kein solches Innenraumelement 607 mit der entsprechenden Perfomance vorhanden, kann wie in Figur 6c dargestellt, lediglich eine Kombination aus Innenraumsensorik 600 und Zusatzeinheit 602 eingefügt werden. Eine intelligente Innenraumsensorik könnte dabei ebenfalls die Vorverarbeitung nach Verfahrensschritt 302 durchführen. Figur 6c eröffnet die Möglichkeit ein bestehendes System aus Steuereinheit 604 und Aggregat 606 die geräuschgeregelte Ansteuerung mittels Innenraumsensorik 600 und Zusatzeinheit 602 hinzuzufügen. Die Zusatzeinheit 602 gibt auch in diesem Fall Informationen zur Anpassung und/oder Bildung der Ansteuersignale für das Aggregat 606 an die Steuereinheit 604 aus.

Eine weitere Möglichkeit bietet schließlich Figur 6d, in welcher die Innenraumsensorik 600 und optional die Aggregatssensorik 605 direkt mit der Steuereinheit 604 verbunden ist. Somit kann das ganze Verfahren beispielsweise wenn bei Erstausrüstung schon bekannt, von der Aggregatssteuereinheit 604 auf der Basis der erfaßten Geräuschsignale verarbeitet werden.

Figur 6, bestehend aus den Figuren 6a, 6b, 6c und 6d zeigt, daß je nach vorhanden sein der beschriebenen Elemente die Verfahrensschritte in unterschiedlichen Elementen durchgeführt werden können. Dadurch können bereits bestehende Funktionalitäten bezüglich der geräuschabhängigen Ansteuerung im Fahrzeug genutzt werden, da beispielsweise für Spracheingaben Mikrofone zur Verfügung stehen sowie für die Signalverarbeitung digitale Signalprozessoren oder auch ähnliche Systeme.

## Patentansprüche

1. Verfahren zur Ansteuerung wenigstens eines Aggregats (104, 116, 219, 220, 606) in einem Fahrzeug, wobei das durch das Aggregat verursachte Geräusch (AG) und/oder wenigstens eine dieses Geräusch repräsentierende Größe (L, N) ermittelt wird, wobei die vorhandenen Innenraumgeräusche (IG) im Fahrzeug ermittelt werden und/oder wenigstens eine diese repräsentierende Größe (L, N) ermittelt wird, **dadurch gekennzeichnet, dass** das durch das Aggregat (104, 116, 219, 220, 606) verursachte ermittelte Geräusch (AG) und/oder die dieses repräsentierende Größe (L, N) mit dem vorhandenen ermittelten Innenraumgeräusch (IG) und/oder der dieses repräsentierenden Größe (L, N) korreliert wird und abhängig davon ein Ansteuersignal für das Aggregat derart gebildet oder angepasst wird, dass das durch das Aggregat verursachte Geräusch durch das vorhandene Innenraumgeräusch verdeckt oder teilweise verdeckt wird.

2. Verfahren nach Anspruch 1, **dadurch gekennzeichnet, dass** das durch das Aggregat verursachte ermittelte Geräusch (AG) und/oder die dieses repräsentierende Größe (L, N) mit den ermittelten Innenraumgeräuschen (IG) und/oder der diese repräsentierenden Größe (L, N) verglichen wird und das Ansteuersignal abhängig von dem Vergleich gebildet oder angepasst wird.

3. Verfahren nach Anspruch 1, **dadurch gekennzeichnet, dass** die durch das Aggregat verursachten Geräusche (AG) und die Innenraumgeräusche (IG) jeweils durch eine Schallgröße (L) repräsentiert werden.

4. Verfahren nach Anspruch 1, **dadurch gekennzeichnet, dass** das Innenraumgeräusch (IG) des Fahrzeugs und/oder die dieses repräsentierende Größe (L, N) wenigstens anteilig Umgebungsgeräusche bezüglich des Fahrzeugs und/oder Betriebsgeräusche des Fahrzeugs und/oder jeweils wenigstens eine diese repräsentierende Größe enthält.

5. Verfahren nach Anspruch 1, **dadurch gekennzeichnet, dass** eine spektrale oder temporale Information der durch das Aggregat verursachten Geräusche (AG) und der Innenraumgeräusche (IG) ermittelt wird oder aus einer Datenbasis ausgelesen werden und die jeweiligen spektralen oder temporalen Informationen der Geräusche in Beziehung gesetzt werden.

6. Verfahren nach Anspruch 5, **dadurch gekennzeichnet, dass** die spektrale oder temporale Information als Schallpegel (L) des durch das Aggregat verursachten Geräusches und des Innenraumgeräusches abhängig von der Frequenz oder der Zeit ausgebildet ist.

7. Vorrichtung mit einer Steuereinheit zur Ansteuerung wenigstens eines Aggregats (104, 116, 219, 220, 606) in einem Fahrzeug mit ersten Mitteln (607, 605), welche durch das Aggregat verursachte Geräusche (AG) und/oder diese repräsentierende Größen (L, N) ermitteln, und mit zweiten Mitteln (600, 601), die vorhandene Innenraumgeräusche (IG) im Fahrzeug und/oder diese repräsentierende Größen (L, N) ermitteln, **dadurch gekennzeichnet, dass** dritte Mittel (604) enthalten sind, welche die ermittelten Geräusche (AG) und die ermittelten vorhandenen Innenraumgeräusche (IG) und/oder die diese repräsentierenden Größen (L, N) korrelieren und die Steuereinheit (107, 200, 604) davon abhängig ein Ansteuersignal für das Aggregat (104, 116, 219, 220, 606) derart bildet oder anpasst, dass das durch das Aggregat verursachte Geräusch das vorhandene Innenraumgeräusch verdeckt oder teilweise verdeckt.

8. Steuereinheit (107, 200, 604) zur Bildung oder Anpassung eines Ansteuersignals für wenigstens ein Aggregat (104, 116, 219, 220, 606), welche mit ersten Mitteln (607, 605) in Verbindung steht oder diese enthält, welche ein durch das Aggregat verursachtes Geräusch (AG) und/oder wenigstens eine dieses repräsentierende Größe (L, N) ermitteln, und die Steuereinheit (107, 200, 604) weiterhin mit zweiten Mitteln (600, 601) in Verbindung steht oder diese enthält, welche vorhandene Innenraumgeräusche (IG) im Fahrzeug und/oder wenigstens eine diese repräsentierende Größe (L, N) ermitteln, **dadurch gekennzeichnet, dass** dritte Mittel (604) enthalten sind, welche die ermittelten Geräusche (AG) und die ermittelten vorhandenen Innenraumgeräusche (IG) und/oder die diese repräsentierenden Größen (L, N) korrelieren und die Steuereinheit (107, 200, 604) davon abhängig ein Ansteuersignal für das Aggregat derart bildet oder anpasst, dass das durch das Aggregat verursachte Geräusch das vorhandene Innenraumgeräusch verdeckt oder teilweise verdeckt.

## Claims

1. Method for driving at least one unit (104, 116, 219, 220, 606) in a vehicle, the noise (AG) caused by the unit and/or at least one variable (L, N) representing this noise being determined, with the existing interior noises (IG) in the vehicle being determined and/or at least one variable (L, N) representing these noises being determined, **characterized in that** the noise (AG) which is determined and is caused by the unit (104, 116, 219, 220, 606) and/or the variable (L, N) representing this noise is correlated with the existing interior noise (IG) which is determined and/or with the variable (L, N) representing this noise and, as a function thereof, a drive signal is formed or adapted for the unit in such a manner that the noise caused by the unit is concealed or partially concealed by the existing interior noise.

2. Method according to Claim 1, **characterized in that** the noise (AG) which is determined and is caused by the unit and/or the variable (L, N) representing this noise is compared with the interior noises (IG) which are determined and/or with the variable (L, N) representing these noises, and the drive signal is formed or adapted as a function of the comparison.

3. Method according to Claim 1, **characterized in that** the noises (AG) caused by the unit and the interior noises (IG) are represented in each case by a sound variable (L).

4. Method according to Claim 1, **characterized in that** the interior noise (IG) of the vehicle and/or the variable (L, N) representing this noise contains at least a share of environmental noises around the vehicle and/or operating noises of the vehicle and/or in each case at least one variable representing these noises.

5. Method according to Claim 1, **characterized in that** spectral or temporal information about the noises (AG) caused by the unit and about the interior noises (IG) is determined or read from a database, and the respective spectral or temporal information items about the noises are related to one another.

6. Method according to Claim 5, **characterized in that** the spectral or temporal information is formed as a function of the frequency or the time as a sound level (L) of the noise caused by the unit and of the interior noise.

7. Device with a control unit for driving at least one unit (104, 116, 219, 220, 606) in a vehicle, having first means (607, 605) which determine noises (AG) caused by the unit and/or variables (L, N) representing these noises, and having second means (600, 601) which determine the existing interior noises (IG) in the vehicle and/or variables (L, N) representing these noises, **characterized in that** third means (604) are included which correlate the noises (AG) which are determined and the existing interior noises (IG) which are determined and/or the variables (L, N) representing these noises, and, as a function thereof, the control unit (107, 200, 604) forms or adapts a drive signal for the unit (104, 116, 219, 220, 606) in such a manner that the noise caused by the unit conceals or partially conceals the existing interior noise.

8. Control unit (107, 200, 604) for forming or adapting a drive signal for at least one unit (104, 116, 219, 220, 606), which control unit is connected to first means (607, 605) or contains them, the first means determining a noise (AG) caused by the unit and/or at least one variable (L, N) representing this noise, and the control unit (107, 200, 604) is furthermore connected to second means (600, 601) or contains them, the said second means determining existing interior noises (IG) in the vehicle and/or at least one variable (L, N) representing these noises, **characterized in that** third means (604) are included which correlate the noises (AG) which are determined and the existing interior noises (IG) which are determined and/or the variables (L, N) representing these noises, and, as a function thereof, the control unit (107, 200, 604) forms or adapts a drive signal for the unit in such a manner that the noise caused by the unit conceals or partially conceals the existing interior noise.

## Revendications

1. Procédé de commande d'au moins un module (104, 116, 219, 220, 606) dans un véhicule, selon lequel on détermine le bruit causé par le module (AG) et/ou au moins une grandeur (L, N) représentant ce bruit, on détermine les bruits régnant dans l'habitacle (IG) du véhicule et/ou au moins une grandeur (L, N) les représentant,
**caractérisé en ce que**
le bruit (AG) déterminé causé par le module (104, 116, 219, 220, 606) et/ou la grandeur (L, N) le représentant est mis en corrélation avec le bruit régnant dans l'habitacle (IG) déterminé et/ou avec la grandeur (L, N) le représentant et, en fonction de cela, un signal de commande pour le module est formé ou adapté de telle sorte que le bruit causé par le module est recouvert ou partiellement recouvert par le bruit régnant dans l'habitacle.

2. Procédé selon la revendication 1,
**caractérisé en ce que**
le bruit (AG) déterminé causé par le module et/ou la grandeur (L, N) le représentant est comparé avec les bruits de l'habitacle (IG) déterminés et/ou avec la grandeur (L, N) les représentant et le signal de commande est formé ou adapté en fonction de cette comparaison.

3. Procédé selon la revendication 1,
**caractérisé en ce que**
les bruits causés par le module (AG) et les bruits de l'habitacle (IG) sont respectivement représentés par une grandeur sonique (L).

4. Procédé selon la revendication 1,
**caractérisé en ce que**
le bruit de l'habitacle (IG) du véhicule et/ou la grandeur le représentant (L, N) contient au moins en partie les bruits de l'environnement du véhicule et/ou les bruits de fonctionnement du véhicule et/ou respectivement au moins une grandeur les représentant.

5. Procédé selon la revendication 1,
**caractérisé en ce qu'**
une information spectrale ou temporelle relative aux bruits causés par le module (AG) et aux bruits de l'habitacle (IG) est déterminée ou est lue à partir d'une base de données et les informations spectrales ou temporelles respectives relatives aux bruits sont mises en relation.

6. Procédé selon la revendication 5,
**caractérisé en ce que**
l'information spectrale ou temporelle est configurée sous forme de niveau sonore (L) du bruit causé par le module et du bruit de l'habitacle, en fonction de la fréquence ou du temps.

7. Dispositif comprenant une unité de commande pour la commande d'au moins un module (104, 116, 219, 220, 606) dans un véhicule, comportant des premiers moyens (607, 605) qui déterminent les bruits causés par le module (AG) et/ou une grandeur (L, N) les représentant, et des seconds moyens (600, 601) qui déterminent les bruits régnant dans l'habitacle (IG) du véhicule et/ou une grandeur (L, N) les représentant,
**caractérisé en ce que**
des troisièmes moyens (604) mettent en corrélation les bruits déterminés (AG) et les bruits régnant dans l'habitacle (IG) déterminés et/ou les grandeurs (L, N) les représentant, et l'unité de commande (107, 200, 604) forme ou adapte en fonction de cela un signal de commande pour le module (104, 116, 219, 220, 606) de telle sorte que le bruit causé par le module recouvre ou recouvre partiellement le bruit régnant dans l'habitacle.

8. Unité de commande (107, 200, 604) pour la formation ou l'adaptation d'un signal de commande pour au moins un module (104, 116, 219, 220, 606), qui contient ou qui est reliée à des premiers moyens (607, 605) qui déterminent un bruit causé par le module (AG) et/ou au moins une grandeur (L, N) le représentant, l'unité de commande (107, 200, 604) en outre ayant ou étant reliée à des seconds moyens (600, 601) qui déterminent des bruits régnant dans l'habitacle (IG) du véhicule et/ou au moins une grandeur (L, N) les représentant,
**caractérisée en ce que**
des troisièmes moyens (604) mettent en corrélation les bruits (AG) déterminés et les bruits régnant dans l'habitacle (IG) déterminés et/ou les grandeurs (L, N) les représentant, et l'unité de commande (107, 200, 604) forme ou adapte en fonction de cela un signal de commande pour le module de telle sorte que le bruit causé par le module recouvre ou recouvre au moins partiellement le bruit régnant dans l'habitacle.
